# EUROPÄISCHE PATENTSCHRIFT

(11) **EP 0 990 856 B1**
(45) Veröffentlichungstag und Bekanntmachung des Hinweises auf die Patenterteilung: **19.05.2004**
(21) Anmeldenummer: 99118435.9
(22) Anmeldetag: 17.09.1999
(51) Int. Cl.: F24D 3/16

(54) **Anordnung zur Klimatisierung von Räumen**
Air conditioning device for a room
Dispositif de conditionnement d'air pour un local

(30) Priorität: 29.09.1998 DE 19844617
(43) Veröffentlichungstag der Anmeldung: 05.04.2000
(73) Patentinhaber: KM Europa Metal Aktiengesellschaft, D-49023 Osnabrück (DE)
(72) Erfinder: Reitz, Erhard, Dipl.-Ing., 49143 Bissendorf (DE); Melcher, Walter, Dipl.-Ing., 49545 Tecklenburg (DE)

(56) Entgegenhaltungen:
- EP-A- 0 366 615
- DE-A- 1 679 329
- DE-A- 4 446 453
- DE-U- 9 401 395

## Beschreibung

Im Umfang der DE 297 22 890 U1 zählt eine massive Fertigteilwand mit Klimakomponenten zum Stand der Technik. Die Fertigteilwand ist als Tonbrandkernwand (Leichtbetonwand) ausgebildet, in die mindestens eine Rohrschlange für die Wasserheizung bzw. -kühlung integriert ist. Die Rohrschlange besteht vorteilhaft aus einem Mehrschicht-PE-Rohr mit einem sauerstoffdichten metallischen Zwischenmantel. Im unteren Höhenbereich der Fertigteilwand werden beide Enden der Rohrschlange in einen vom zu klimatisierenden Raum her zugänglichen Anschlußkasten herausgeführt und mit Anschlußverbindungsstücken versehen.

Die bekannte Fertigteilwand kann nach dem Vergießen und Aushärten des Tonbrand-Leichtbetons wie jede andere Fertigteilwand transportiert und auf einem vorgesehenen Fundament befestigt werden. Nach der Montage werden die Verbindungsrohrleitungen im Anschlußkasten mit der Rohrschlange der Fertigteilwand nach üblicher Art, z.B. vom Fußboden aus, verbunden. Mit einer konstruktionsbedingt vergleichsweise dicken Fertigteilwand können jedoch Decken und Böden, insbesondere bei Sanierungsmaßnahmen, nicht versehen werden.

Des weiteren ist es zur Klimatisierung von Räumen bekannt (CCI 9/96, Zeitung für Fachleute der technischen Gebäudeausrüstung und Energieanwendung "Leistungsfähigkeit auch im Sommer"), oberhalb einer abgehängten Metalldecke ein Rohrschlangensystem zu installieren, über das durch ein entsprechend temperiertes Fluid (kalt oder warm) der unterhalb der Metalldecke liegende Raum klimatisiert werden kann. Wände und Böden können indessen mit einer solchen Anordnung nicht sinnvoll ausgerüstet werden.

Schließlich zählen Wandheizungen zum Stand der Technik (Veröffentlichung "Zuhause Wohnen" 28/94 S. 46), bei denen zu ihrer Erstellung zunächst auf Rohbauwänden Kupferrohrregister befestigt und anschließend mit einem Spezialputz bedeckt werden. Die Enden der Kupferrohrregister werden an die Vor- und Rücklaufleitungen von Heiz- oder Kühlsystemen angeschlossen. Eine solche Wandheizung erfordert einen relativ hohen manuellen Aufwand.

Allen vorbeschriebenen Heizungs- bzw. Kühlsystemen liegt die Eigenschaft zugrunde, daß von ihnen langwellige Infrarot-Wärmestrahlungen ausgehen, die durch Anregung wichtiger regulierender Hautfunktionen einen positiven Einfluß auf den gesamten Organismus auslösen und das Immunsystem stärken. Außerdem bleibt die Atemluft unbewegt und damit auch feinstaubfrei, da die Strahlungswärme keine Luftumwälzung (Konvektion) verursacht und so vor Stauballergien schützt.

Der Erfindung liegt ausgehend vom Stand der Technik die Aufgabe zugrunde, eine Anordnung zur Klimatisierung von Räumen zu schaffen, die mit gleichem Vorteil sowohl bei Neubauten als auch im Rahmen von Sanierungsmaßnahmen bei Altbauten konzipiert und in variabler Gestaltung - abhängig von den jeweiligen nutzungsbedingten Anforderungen - den jeweiligen Räumen decken-, wand- oder bodenseitig zugeordnet werden kann.

Die Lösung dieser Aufgabe wird nach der Erfindung in den Merkmalen des Anspruchs 1 gesehen.

Im Rahmen der erfindungsgemäßen Anordnung gelangen spezielle Klimaplatten zum Einsatz, die eine formschlüssige Einheit aus Fluidkanal-Konfigurationen aus Kupfer und mineralischem Material bilden und somit eine besonders gute Wärmeleitfähigkeit sowie einen hohen Wirkungsgrad gewährleisten. Mit Hilfe dieser im Trockenbau mit herkömmlichen Platten im gewohnten systembedingten Rastermaß kombinierbaren Klimaplatten kann jetzt in Objekten beliebiger Größe ein besseres Raumklima erzeugt werden. Gleichzeitig arbeitet die Anordnung der Erfindung wesentlich energiesparender als herkömmliche Klimaanlagen. Aufgrund ihrer speziellen Bauweise deckt die Anordnung alle Anwendungsbereiche ab und kann als Kühldeckensystem, Wandkühlung, Wandheizung, Deckenheizung, Fußbodenheizung oder Fußbodenkühlung eingesetzt werden.

Die Klimaplatten der Anordnung vereinigen die Vorzüge von seit Jahrzehnten für sich bewährten Baustoffen. Hochwertige Fluidkanal-Konfigurationen aus Kupfer dienen als Leitungssystem für ein Kühl- oder Heizfluid, während rein mineralisches Material nicht nur den Korpus der Klimaplatten, sondern auch zugleich deren Oberflächen bildet und insbesondere die Funktion als Energietauscher mit gutem Strahlungsverhalten übernimmt. Die erfindungsgemäße Kombination von Korpus und Fluidkanal-Konfigurationen einerseits und Materialien andererseits erfüllt in ihrer Diffusions- und Sorptionsfähigkeit modernste bauphysikalische und bauphysiologische Anforderungen.

Da die Fluidkanal-Konfigurationen benachbarter Klimaplatten unmittelbar fluidleitend kuppelbar sind, können die entsprechenden Kupplungen in den Ebenen der Klimaplatten vorgesehen werden. Dies schafft mit die Voraussetzungen dafür, daß der Raum zwischen den Klimaplatten und den Rohbauteilen jetzt optimal zur Unterbringung von Dämmmaterial genutzt werden kann. Die Klimaplatten können aber auch direkt auf vorhandene Bauteile montiert werden. Dies ist gerade bei der Sanierung von Altbauten von Vorteil, um das zur Verfügung stehende Nutzvolumen der Räume nicht merklich einzuschränken.

Die spezielle Zusammensetzung des den Korpus bildenden Hydratgemisches aus verschiedenen Hydratstufen mit mineralogischen und/oder metallischen Zusätzen mit dichtem Gefüge bildet die Gewähr dafür, daß die Klimaplatten in Relation zur Dicke der Fluidkanal-Konfigurationen extrem dünn gehalten werden können, ohne daß sie ihre selbsttragende Funktion verlieren. Ferner können die Fluidkanal-Konfigurationen durch die vergleichsweie großen Querschnitte der Fluidkanäle von einer größeren Fluidmenge durchströmt werden, wodurch die Leistungsübertragung und die Regelfähigkeit gegenüber bekannten Konstruktionen deutlich verbessert wird. Durch die sehr flache Konstruktion mit guter Wärmeleitfähigkeit und großen Fluidkanälen kommt es nicht zu der bekannten Massenträgheit, wie sie bei den zum Stand der Technik gehörenden Anordnungen anzutreffen ist.

Die Behaglichkeit der mit der erfindungsgemäßen Anordnung ausgestatteten Räume wird insofern erhöht, da bereits bei einer geringen Temperatur als üblich, beispielsweise 18 °C im Gegensatz zu 21 °C, die Nutzer der Räume eine angenehme Strahlungswärme ohne Zugluft verspüren. Hinzu kommt, daß durch das spezielle halbharte oder harte Kupfermaterial mit einer Mindestfestigkeit von R250 nach DIN EN 1057, bevorzugt R290, und einer Gleichmaßdehnung von größer 0,9 % die Baustoffe eines Korpus einerseits und der Fluidkanal-Konfiguration andererseits hinsichtlich des Ausdehnungsverhaltens genau einander entsprechen. Dieser Sachverhalt ist mit dem weiteren Vorteil verbunden, daß eine erfindungsgemäße Anordnung nicht nur in Räumen mit tiefen Temperaturen, beispielsweise bis zu -50 °C, z.B. in Kühlräumen, sondern auch in Räumen mit demgegenüber weitaus höheren Temperaturen, beispielsweise bis zu etwa +90 °C eingesetzt werden kann. Hierbei ist femer an Außenfassaden, z.B. zur Nutzung der Sonnenenergie gedacht, indem Klimaplatten außen an Gebäuden angebracht und mit einer TWD (transparente Wärmedämmung) versehen als Solarabsorber dienen. Da die Fluidkanal-Konfigurationen nur einen geringen Überdeckungsgrad mit dem Material der Korpusse haben, ist das Gewicht der Klimaplatten, wenn sie das im Trockenbau übliche Rastermaß von 625 x 625 mm aufweisen, gering. Sie sind dadurch leicht zu handhaben. Es sind im Prinzip auch keine zusätzlichen Armierungsbestandteile notwendig, da das Material jedes Korpus solche Eigenschaften hat, daß die Fluidkanal-Konfiguration selber diese Armierung übernimmt. Hierdurch wird eine 100 %ige Recycle- und Rückführbarkeit der Einzelkomponenten in den Produktionsprozeß ermöglicht.

Zweckmäßig werden die Klimaplatten mindestens mittelbar an den jeweiligen Unterkonstruktionen lösbar befestigt. Hierzu können Schraubbolzen verwendet werden, die direkt bei der Fertigung der Klimaplatten hergestellte Bohrungen durchsetzen und beispielsweise in Dämmmaterial, Unterkonstruktionen oder direkt in örtlich vorhandene Bauteile eingetrieben werden.

Ein weiterer Vorteil der Erfindung liegt darin, daß das Material der Fluidkanal-Konfigurationen es erlaubt, insbesondere Rohrregister mit sehr engen Mäandern und kleinen Radien zu erstellen, was die Leistungsfähigkeit jeder einzelnen Klimaplatte merklich erhöht. Auf diese Art und Weise kann der jeweilige optimale Leistungsbedarf eines Raums durch eine geringere Anzahl von Klimaplatten abgedeckt werden. Es sind aber auch andere Konfigurationen von Rohrregistern denkbar, z.B. in Form von parallelen Rohren, die endseitig an Sammler angeschloßen sind. Ferner können die Fluidkanal-Konfigurationen aus aus Kupferplatten gefertigten Fluidkanalinlays mit streckmetallähnlichem Körper zwischen den Fluidkanälen bestehen. Diese enden jeweils in einem Steckfittinganschluß. Hiermit können noch höhere Festigkeiten, filigranere Klimaplatten und eine bessere innere Wärmeverteilung erzielt werden.

Schließlich ist noch darauf hinzuweisen, daß die erfindungsgemäße Zusammensetzung des Hydratgemisches der Korpusse auch einen extrem häufigen Wechsel der jeweiligen Raumfeuchte bis hin zur völligen Durchfeuchtung, z.B. bei ungewollter Unterschreitung des Taupunkts beim Kühlen, ohne weiteres auffängt, ohne daß die bei Platten aus mineralischen Materialien, vorzugsweise Gipsbaustoffe, ansonsten bekannten Probleme auftreten. Das Material behält seine Festigkeit bei. Es wird nicht mürbe. Seine Dichte liegt zwischen ca. 1200 1500 kg/m³. Die Wärmeleitfähigkeit bewegt sich zwischen 0,40 und 0,70 W/mK. Der Ausdehungskoeffizient α beträgt 1,7·10⁻⁵K⁻¹. Die Wassereindringzahl liegt ungefähr bei 10 - 20 kg/m²·h^{0,5}.

Da das Hydratgemisch des Korpus ein dichtes Gefüge aufweist, ist die Oberfläche jeder Klimaplatte glatt und eben, so daß Tapeten oder Anstriche ohne zusätzliche Maßnahmen unmittelbar aufgebracht werden können.

Das Material der Fluidkanal-Konfigurationen erlaubt es aufgrund seiner metallischen Eigenschaft, daß der Verlauf der Fluidkanäle in den Klimaplatten nach der Montage und auch ggf. nach dem Tapezieren bzw. einem Anstrich ohne weiteres mit Hilfe geeigneter, marktüblicher Geräte detektiert werden kann. Es besteht somit kein Problem, auch Nägel oder andere Bolzen in die Klimaplatten einzutreiben, um beispielsweise Bilder aufzuhängen. Die Fluidkanäle werden nicht beschädigt.

In bevorzugter Ausgestaltung des erfindungsgemäßen Grundgedankens besteht das Hydratgemisch des Korpus einer Klimaplatte in den im Anspruch 2 angegebenen Merkmalen.

Damit die Klimaplatten eine noch bessere Handhabbarkeit beim Lagern, beim Transport und bei der Montage aufweisen, können gemäß Anspruch 3 dem Hydratgemisch Naturfasern, insbesondere behandelte Naturfasern, z.B. mit Wasserglas behandelte Naturfasern, und/oder Kunstfasern in jeweils erforderlicher Menge zudosiert werden.

In diesem Zusammenhang sieht eine Variante vor (Anspruch 4), daß dem Hydratgemisch 0,1-1 Gew.% Glasfasern zudosiert sind.

Eine andere Variante kann nach Anspruch 5 darin bestehen, daß dem Hydratgemisch 0,5-3 Gew.% Cellulosefasern zudosiert sind.

Um die Wärmeleitfähigkeit der Klimaplatten noch weiter zu erhöhen, kann es entsprechend den Merkmalen des Anspruchs 6 sinnvoll sein, dem Hydratgemisch hochleitende metallische Stoffe in Form von insbesondere granulat- oder pulverförmigem Kupfer oder Kupfer-Legierungen in einer Größenordnung von bis zu 15 Gew.% beizufügen.

Bevorzugt werden solche Stoffe nach Anspruch 7 in einer Größenordnung von 5 bis 10 Gew.% beigefügt.

Die Fließverbesserer gemäß Anspruch 8 tragen dafür Sorge, daß sich bei der Herstellung der Klimaplatten das Hydratgemisch besser und schneller um die Fluidkanal-Konfigurationen herum in der jeweiligen Form verteilen kann. Insbesondere wird mit einem Fließverbesserer sichergestellt, daß die Klimaplatten lunkerfrei sind.

Dabei erfolgt in bevorzugter Ausführungsform gemäß Anspruch 9 eine Beifügung in einer Größenordnung von 0,1 bis 1 Gew.%.

Die Wirtschaftlichkeit der Fertigung der erfindungsgemäßen Klimaplatten kann nach Anspruch 10 dadurch erhöht werden, daß dem Hydratgemisch Stellmittel in Form von Abbindebeschleunigern in einer Größenordnung von 0,1 bis 2,5 Gew.% beigefügt werden.

Bevorzugt werden derartige Stellmittel nach Anspruch 11 in einer Größenordnung von 0,1 bis 1 Gew.% beigefügt.

Die Zusammensetzung des Hydratgemisches entsprechend den Merkmalen des Anspruchs 1, insbesondere aber gemäß denjenigen des Anspruchs 2, stellt sicher, daß nach Anspruch 12 das Verhältnis der Dicke einer Fluidkanal-Konfiguration zur Dicke einer Klimaplatte mindestens 40 % beträgt. Die Dicke der Klimaplatte kann sich bevorzugt zwischen 9,5 und 25 mm bewegen.

Die Montage einer Schicht aus Klimaplatten, sei sie nun an einer Decke, an einer Wand oder an einem Boden vorgesehen, wird gemäß Anspruch 13 dadurch erleichtert, daß die Fluidkanal-Konfigurationen benachbarter Klimaplatten durch Steckverbindungen gekuppelt sind.

Um bei der Herstellung von Klimaplatten spätere Rißbildungen im Heizbetrieb zu verhindern, sieht die Erfindung entsprechend den Merkmalen des Anspruchs 14 vor, daß die Fluidkanal-Konfiguration vor oder während der Ummantelung mit dem Hydratgemisch eine Temperatur zwischen 35 °C und 50 °C aufweist. Danach erfolgt ein Vorwärmen der Fluidkanal-Konfiguration während des Gieß- und Aushärteprozesses, so daß diese während der Verfestigung des Klimaplattengrundwerkstoffs eine vergrößerte Länge hat. Nach Verfestigung kann die Fluidkanal-Konfiguration abkühlen. Die nicht mögliche negative Längendehnung führt zu Zugspannungen in dieser, die sich als Druckspannungen im Grundwerkstoff auswirken. Die Fluidkanal-Konfiguration liegt also bei Raumtemperatur vorgespannt im Grundwerkstoff. Die Vorwärmung erfolgt beispielsweies durch elektrischen Strom. Dabei wird eine Spannung an den Enden der Fluidkanal-Konfiguration angeschlossen. Ihr ohmscher Widerstand bewirkt eine Erwärmung. Es ist möglich, die Fluidkanal-Konfiguration in der Gießform und während des Aushärtens vorzuwärmen. Die Fluidkanal-Konfiguration ist über z.B. Abstandshalter gegenüber der Gießform isoliert fixiert. Die Temperatureinstellung/-messung läßt sich durch die Stromstärke vornehmen/ableiten.

Die beschriebene Maßnahme stellt eine relativ einfach zu realisierende Möglichkeit dar, mit der die Fluidkanal-Konfigurationen unter Vorspannung in die Klimaplatten eingebettet werden können. Ihre Vorteile sind darin begründet, daß mineralisch gebundene Werkstoffe grundsätzlich in der Lage sind, wesentlich höhere Druck- als Zugspannungen aufnehmen zu können. Je nach eingestellter Vorwärmtemperatur stellt sich in einer unbelasteten Klimaplatte eine Vorspannung (Druckspannung) ein. Bei Temperierung der Klimaplatte im Betrieb entsteht erst dann eine Zugspannung im Korpus, wenn die bei der Herstellung eingestellte Vorwärmtemperatur überschritten wird.

Die Erfindung ist nachfolgend anhand von in den Zeichnungen dargestellten Ausführungsbeispielen näher erläutert. Es zeigen:
- Figur 1: in der Perspektive den Eckbereich eines Raums mit einer Anordnung zu seiner Klimatisierung;
- Figur 2: in vergrößerter Darstellung in der Frontalansicht eine Klimaplatte der Anordnung der Figur 1;
- Figur 3: eine Draufsicht auf die Klimaplatte gemäß dem Pfeil III der Figur 2;
- Figur 4: in vergrößerter Darstellung einen vertikalen Querschnitt durch die Darstellung der Figur 1 im Bereich der Decke des zu klimatisierenden Raums und
- Figur 5: im schematischen vertikalen Querschnitt die Anordnung von Klimaplatten gemäß den Figuren 2 und 3 auf einem Boden, an einer Wand und an einer Decke eines Raums.

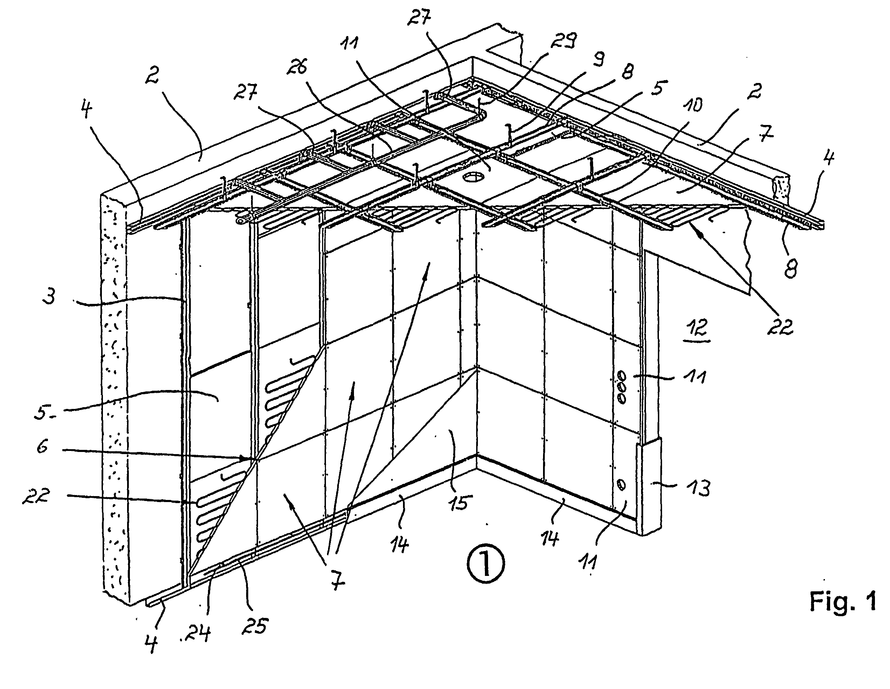

In der Figur 1 ist mit 1 ein durch Wände 2 begrenzter Raum bezeichnet. An den Wänden 2 ist eine Unterkonstruktion 3, 4 aus vertikalen Metallprofilen 3 und horizontalen decken- bzw. bodenseitigen Randprofilen 4 befestigt Die Unterkonstruktion 3, 4 dient der Festlegung von Dämmplatten 5. Vor den Dämmplatten 5 befindet sich eine Anordnung 6 zur Klimatisierung des Raums 1, die aus vorgefertigten, nachstehend noch näher erläuterten Klimaplatten 7 besteht und im Trockenbau schichtartig im Raster festgelegt ist. Das Raster hat die im Trockenbau üblichen Rastermaße von 625 x 625 mm.

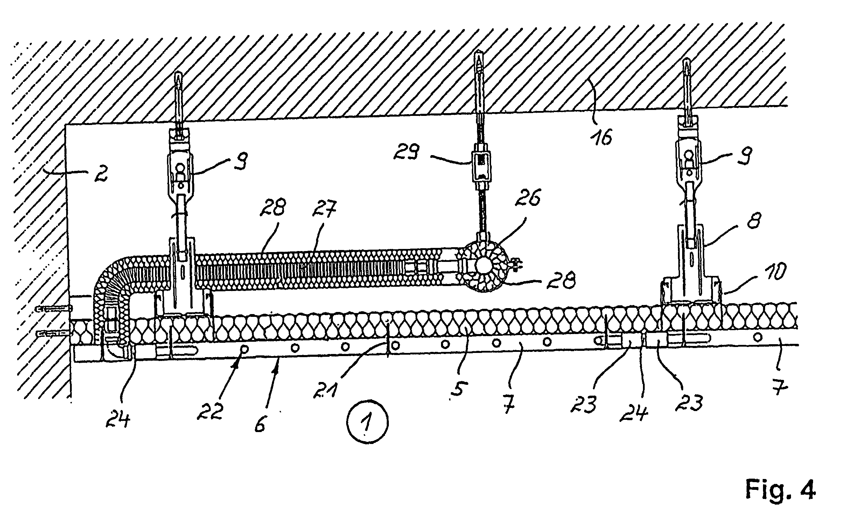

Unter der Decke 16 des Raums 1 (siehe auch Figur 4) sind Abhängeprofile 8 mittels Distanzhaltern 9 befestigt. An den Abhängeprofilen 8 sind Aufnahmeprofile 10 festgelegt, die der Lagefixierung von Dämmplatten 5 dienen. Unterhalb der Dämmplatten 5 sind wiederum Klimaplatten 7 mit dem Rastermaß 625 x 625 mm befestigt, welche ebenfalls eine schichtartige Anordnung 6 bilden.

Des weiteren läßt die Figur 1 erkennen, daß neben den Klimaplatten 7 sowohl an den Wänden 2 als auch an der Decke 16 Installationsplatten 11 im vorgegebenen Rastermaß befestigt sind.

Eine Tür 12 in der Wand 2 ist mit einer Türzarge 13 versehen. Eine Fußleiste 14 begrenzt den unteren Rand der Wände 2. Die Klimaplatten 7 an den Wänden 2 sind mit einer Tapete 15 beklebt.

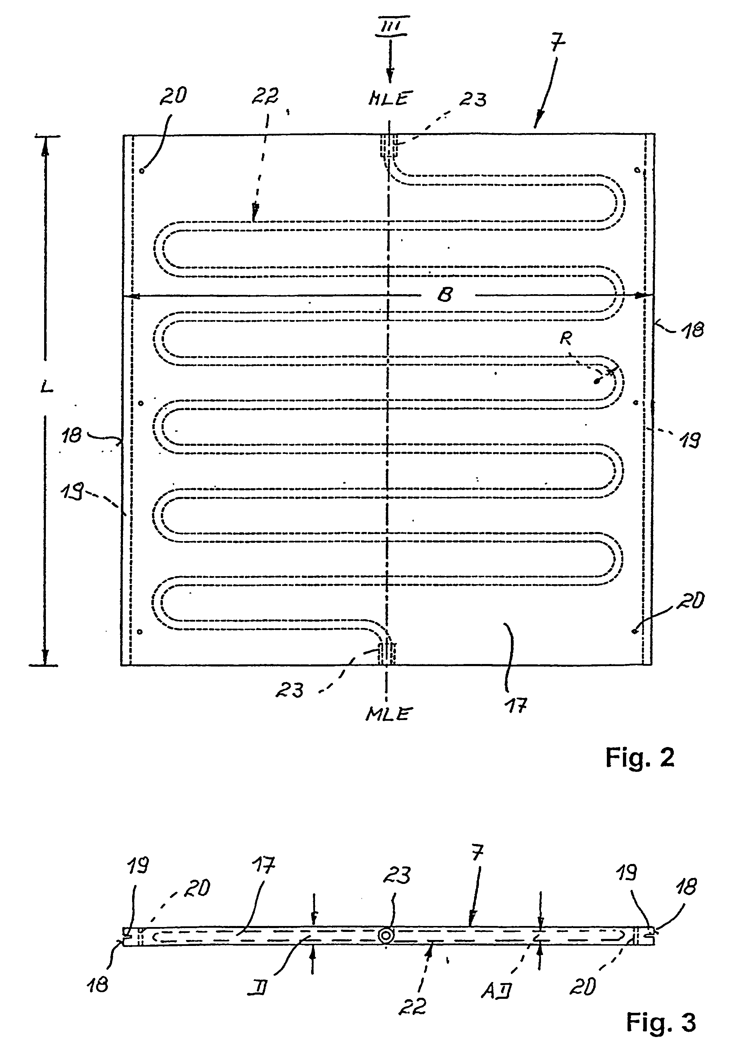

Wie die Figuren 2 und 3 näher erkennen lassen, weist jede Klimaplatte 7 einen Korpus 17 aus mineralischen Materialien in Form eines Hydratgemisches verschiedener Hydratstufen sowie mineralogischen und/oder metallischen Zusätzen mit dichtem Gefüge auf. An den Randseiten 18 des Korpus 17 sind Schlitze 19 eingearbeitet, welche dem Einsatz von nicht näher veranschaulichten T-förmigen Trageprofilen dienen können. Neben den Schlitzen 19 sind Bohrungen 20 vorgesehen, die der mindestens mittelbaren Festlegung der Klimaplatte 7, z.B. an der Unterkonstruktion 3, 4, dienen. Hierzu können entsprechende Schraubbolzen 21 vorgesehen werden, wie sie aus der Figur 4 hervorgehen. Der Korpus 17 hat beim Ausführungsbeispiel eine Dicke D von 20 mm. Die Breite B sowie die Länge L der Klimaplatte 7 betragen unter Berücksichtigung des notwendigen Spalts zwischen zwei Klimaplatten 7 625 mm. Das entspricht dem üblichen Rastermaß im Trockenbau.

In den Korpus 17 ist eine Fluidkanal-Konfiguration eines mäanderförmig gebogenen Rohrregisters 22 aus einer Kupferlegierung mit einer Festigkeit von 290 N/mm² und einer Gleichmaßdehnung von größer 0,9 % integriert (siehe auch Figuren 1 und 4). Die Enden 23 des Rohrregisters 22 liegen in der Mittellängsebene MLE der Klimaplatte 7. Auf diese Weise können zwei benachbarte Klimaplatten 7 gemäß der Darstellung der Figur 4 über Steckverbindungen 24 fluidleitend aneinander gekoppelt werden.

Es ist insbesondere der Figur 3 zu entnehmen, daß das Verhältnis des Außendurchmessers AD des Rohrregisters 22 zur Dicke D der Klimaplatte 7 etwa 50 % beträgt, d.h. die Klimaplatte 7 ist 20 mm dick und der Außendurchmesser AD des Rohrregisters 22 beträgt 10 mm. Die gestreckte Länge des Rohrregisters 22 in einer Klimaplatte 7 beträgt beim Ausführungsbeispiel 5775 mm. Der Biegeradius R des Rohrregisters 22 beläuft sich auf 26 mm.

Während bei der Darstellung der Figur 1 hinter den Fußleisten 14 eine Zuführleitung 25 für ein Kühl- oder Heizfluid angeordnet ist, mit der die unteren Enden der Rohrregister 22 in den die Wände 2 bedeckenden Klimaplatten 7 über Steckverbindungen 24 verbunden sind, lassen die Figuren 1 und 3 die Zuführung des Kühl- oder Heizfluids in die Klimaplatten 7 unterhalb der Decke 16 erkennen. Hierbei gelangt das Kühl- oder Heizfluid von einer oberhalb der Dämmplatten 5 verlegten Zuführleitung 26 über die Dämmplatten 5 vertikal durchsetzende flexible Anschlußschläuche 27 und Steckverbindungen 24 in die Rohrregister 22 der deckenseitigen Klimaplatten 7. Sowohl die Zuführleitung 26 als auch die Anschlußschläuche 27 sind von einem Dämmmaterial 28 ummantelt. Die Zuführleitung 26 ist über längenveränderbare Halterungen 28 an die Decke 16 gehängt.

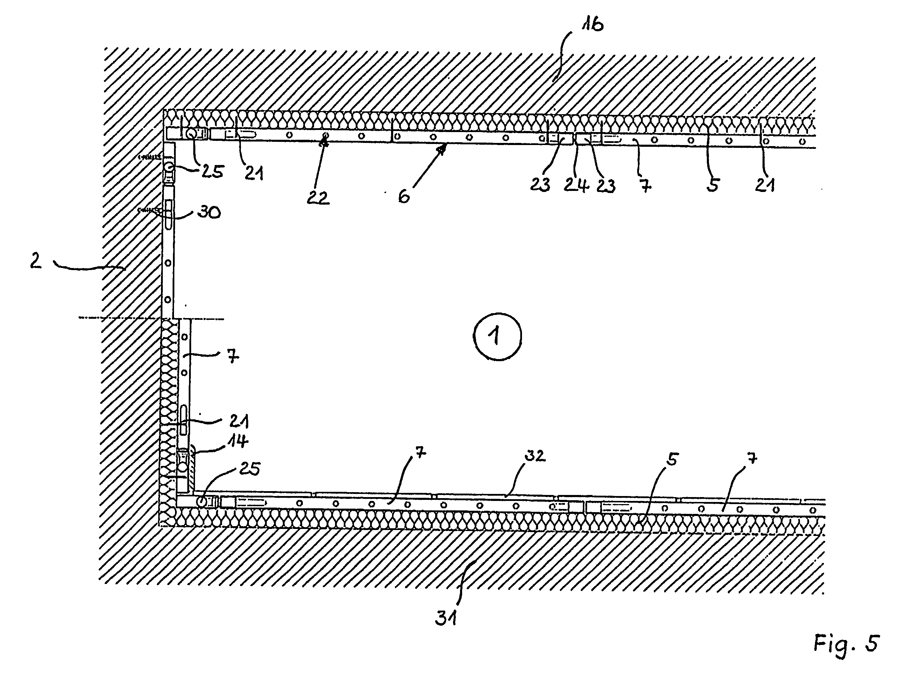

In der Figur 5 ist schematisch veranschaulicht, wie Schichten aus rasterförmig zusammengesetzten Klimaplatten 7 unmittelbar mit Hilfe von Mauerdübeln 30 an der Wand 2 oder unter Eingliederung von Dämmplatten 5 auf dem Boden 31 bzw. an der Decke 16 eines Raums 1 festgelegt werden können. Auch hierbei liegen die Steckverbindungen 24 zwischen den Klimaplatten 7 sowie die Zuführleitungen 25 in den Plattenebenen.

Mit 32 ist ein Fußbodenbelag auf den Klimaplatten 7 bezeichnet.

### Bezugszeichenaufstellung

- 1 -: Raum
- 2 -: Wände v. 1
- 3 -: vertikale Metallprofile
- 4 -: horizontale Randprofile
- 5 -: Dämmplatten
- 6 -: Anordnung
- 7 -: Klimaplatten
- 8 -: Abhängeprofile
- 9 -: Distanzhalter
- 10 -: Aufnahmeprofile
- 11 -: Installationsplatten
- 12 -: Tür
- 13 -: Türzarge
- 14 -: Fußleisten
- 15 -: Tapete
- 16 -: Decke v. 1
- 17 -: Korpus v. 7
- 18 -: Randseiten v. 17
- 19 -: Schlitze in 18
- 20 -: Bohrungen in 17
- 21 -: Schraubbolzen
- 22 -: Rohrregister
- 23 -: Enden v. 22
- 24 -: Steckverbindungen
- 25 -: Zuführleitung
- 26 -: Zuführleitung
- 27 -: Anschlußschläuche
- 28 -: Dämmmaterial
- 29 -: Halterung f. 26
- 30 -: Mauerdübel
- 31 -: Boden v. 1
- 32 -: Fußbodenbelag

- AD -: Außendurchmesser v. 22
- D -: Dicke v. 17
- B -: Breite v. 7
- L -: Länge v. 7
- MLE -: Mittellängsebene v. 7

## Patentansprüche

1. Anordnung zur Klimatisierung von Räumen (1), die aus vorgefertigten Klimaplatten (7) besteht und im Trockenbau schichtartig in Rasterform unter einer Decke (16), vor einer Wand (2) oder über einem Boden (31) konfigurierbar ist, bei welcher jede für sich an einer Unterkonstruktion (3, 4; 8, 10) mindestens mittelbar festlegbare Klimaplatte (7) einen Korpus (17) aus mineralischen Materialien in Form eines Hydratgemisches verschiedener Hydratstufen sowie mineralogischen und/oder metallischen Zusätzen mit dichtem Gefüge aufweist, in den eine Fluidkanal-Konfiguration (22) aus Kupfer oder einer Kupferlegierung mit einer Mindestfestigkeit von 250 N/mm² und einer Gleichmaßdehnung von größer 0,9 % integriert ist, das endseitig mit Fluidkanal-Konfigurationen (22) benachbarter Klimaplatten (7) fluidleitend kuppelbar ist, wobei das Hydratgemisch - in Gewichtsprozenten ausgedrückt - aus bis zu 30 % α-Halbhydrat (CaSO₄ · 1/2 H₂O), 30-60 % β-Halbhydrat (CaSO₄ · 1/2 H₂O), 15-45 % Anhydrit III (CaSO₄III), 0,05-5 % Calciumsulfat-Dihydrat (CaSO₄ · 2 H₂O) mit den Zuschlägen 2,5-30 % Siliziumdioxid (SiO₂), 0,5-25 % Calciumcarbonat (CaCO₃) und 0,5-15 % Magnesiumcarbonat (MgCO₃) besteht sowie durch Hinzufügung von Wasser in etwa 0,6-0,8facher Menge mit anschließender Trocknung hergestellt ist.

2. Anordnung nach Anspruch 1, bei welcher das Hydratgemisch - in Gewichtsprozenten ausgedrückt - aus bis zu 10 % α-Halbhydrat (CaSO₄ · 1/2 H₂O), 30 - 40 % β-Halbhydrat, 30-40 % Anhydrit III (CaSO₄III), 0,1-1 % Calciumsulfat-Dihydrat (CaSO₄ · 2 H₂O) mit den Zuschlägen 5-10 % Siliziumdioxid (SiO₂), 1,5-10 % Calciumcarbonat (CaCO₃) und 0,5-2 % Magnesiumcarbonat (MgCO₃) besteht sowie durch Hinzufügung von Wasser in etwa 0,7facher Menge mit anschließender Trocknung hergestellt ist.

3. Anordnung nach Anspruch 1 oder 2, bei welcher dem Hydratgemisch Naturfasern, insbesondere behandelte Naturfasern, undloder Kunstfasern zudosiert sind.

4. Anordnung nach einem der Ansprüche 1 bis 3, bei welcher dem Hydratgemisch 0,1-1 Gew.% Glasfasern zudosiert ist.

5. Anordnung nach einem der Ansprüche 1 bis 3, bei welcher dem Hydratgemisch 0,5-3 Gew.% Cellulosefasern zudosiert sind.

6. Anordnung nach einem der Ansprüche 1 bis 5, bei welcher dem Hydratgemisch hochleitende metallische Stoffe in Form von insbesondere granulat- oder pulverförmigem Kupfer oder Kupferlegierungen in einer Größenordnung von bis zu 15 Gew.% beigefügt sind.

7. Anordnung nach einem der Ansprüche 1 bis 5, bei welcher dem Hydratgemisch hochleitende metallische Stoffe in Form von insbesondere granulat- oder pulverförmigem Kupfer oder Kupferlegierungen in einer Größenordnung von 5 bis 10 Gew.% beigefügt sind.

8. Anordnung nach einem der Ansprüche 1 bis 7, bei welcher dem Hydratgemisch Stellmittel in Form von Fließverbesserern in einer Größenordnung von 0,1-2,5 Gew.% beigefügt sind.

9. Anordnung nach einem der Ansprüche 1 bis 7, bei welcher dem Hydratgemisch Stellmittel in Form von Fließverbesserern in einer Größenordnung von 0,1-1 Gew.% beigefügt sind.

10. Anordnung nach einem der Ansprüche 1 bis 9, bei welcher dem Hydratgemisch Stellmittel in Form von Abbindungsbeschleunigern in einer Größenordnung von 0,1-2,5 Gew.% beigefügt sind.

11. Anordnung nach einem der Ansprüche 1 bis 9, bei welcher dem Hydratgemisch Stellmittel in Form von Abbindungsbeschleunigern in einer Größenordnung von 0,1-1 Gew.% beigefügt sind.

12. Anordnung nach einem der Ansprüche 1 bis 11, bei welcher das Verhältnis der Dicke (AD) einer Fluidkanal-Konfiguration (22) zur Dicke (D) einer Klimaplatte (7) mindestens 40 % beträgt.

13. Anordnung nach einem der Ansprüche 1 bis 12, bei welcher die Fluidkanal-Konfigurationen (22) benachbarter Klimaplatten (7) durch Steckverbindungen (24) gekuppelt sind.

14. Anordnung nach einem der Ansprüche 1 bis 13, bei welcher die Fluidkanal-Konfiguration (22) vor oder während der Ummantelung mit dem Hydratgemisch eine Temperatur zwischen 35 °C und 50 °C aufweist.

## Claims

1. Arrangement for the air conditioning of rooms (1) which consists of prefabricated air conditioning panels (7) and can be configured in dry construction in a layered manner in the form of a grid below a ceiling (16), in front of a wall (2) or above a floor (31), in which each air conditioning panel (7), which can be fixed individually at least indirectly to a backing (3, 4; 8, 10), has a body (17) made of mineral materials in the form of a hydrated mixture of various stages of hydration and mineralogical and/or metallic additions with a dense structure, into which body (17) a fluid duct configuration (22) made of copper or a copper alloy with a minimum strength of 250 N/mm² and a uniform elongation of greater than 0.9% is integrated which can be coupled in a fluid-conducting manner at the ends to fluid duct configurations (22) of adjacent air conditioning panels (7), wherein the hydrated mixture - expressed in weight percentages - consists of up to 30% α-hemihydrate (CaSO₄·1/2 H₂O), 30 to 60% β-hemihydrate (CaSO₄·1/2 H₂O), 15 to 45% anhydrite III (CaSO₄III), 0.05 to 5% calcium sulphate dihyrate (CaSO₄·2 H₂O) with aggregates 2.5 to 30% silicon dioxide (SiO₂), 0.5 to 25% calcium carbonate (CaCO₃) and 0.5 to 15% magnesium carbonate (MgCO₃) and is produced by adding water in an approximately 0.6 to 0.8-fold quantity with subsequent drying.

2. Arrangement according to claim 1, in which the hydrated mixture - expressed in weight percentages - consists of up to 10% α-hemihydrate (CaSO₄·1/2 H₂O), 30 to 40% β-hemihydrate, 30 to 40% anhydrite III (CaSO₄III), 0.1 to 1% calcium sulphate dihydrate (CaSO₄·2 H₂O) with the aggregates 5 to 10% silicon dioxide (SiO₂), 1.5 to 10% calcium carbonate (CaCO₃) and 0.5 to 2% magnesium carbonate (MgCO₃) and by adding water in an approximately 0.7-fold quantity with subsequent drying.

3. Arrangement according to claim 1 or 2, in which natural fibres, in particular treated natural fibres and/or synthetic fibres, are added to the hydrated mixture.

4. Arrangement according to any one of claims 1 to 3, in which 0.1 to 1 % by weight glass fibres are added to the hydrated mixture.

5. Arrangement according to any one of claims 1 to 3, in which 0.5 to 3 % by weight cellulose fibres are added to the hydrated mixture.

6. Arrangement according to any one of claims 1 to 5, in which highly conductive metallic materials in the form of, in particular, granular or powdery copper or copper alloys are added to the hydrated mixture in a magnitude of up to 15 % by weight.

7. Arrangement according to any one of claims 1 to 5, in which highly conductive metallic materials in the form of, in particular, granular or powdery copper or copper alloys are added to the hydrated mixture in a magnitude of 5 to 10 % by weight.

8. Arrangement according to any one of claims 1 to 7, in which additives in the form of fluidity improvers are added to the hydrated mixture in a magnitude of 0.1 to 2.5 % by weight.

9. Arrangement according to any one of claims 1 to 7, in which additives in the form of fluidity improvers are added to the hydrated mixture in a magnitude of 0.1 to 1 % by weight.

10. Arrangement according to any one of claims 1 to 9, in which additives in the form of setting accelerators are added to the hydrated mixture in a magnitude of 0.1 to 2.5 % by weight.

11. Arrangement according to any one of claims 1 to 9, in which additives in the form of setting accelerators are added to the hydrated mixture in a magnitude of 0.1 to 1 % by weight.

12. Arrangement according to any one of claims 1 to 11, in which the ratio of the thickness (AD) of a fluid duct configuration (22) to the thickness (D) of an air conditioning panel (7) is at least 40%.

13. Arrangement according to any one of claims 1 to 12, in which the fluid duct configurations (22) of adjacent air conditioning panels (7) are coupled by plug connections (24).

14. Arrangement according to any one of claims 1 to 13, in which the fluid duct configuration (22) has a temperature between 35°C and 50°C prior to or during covering with the hydrated mixture.

## Revendications

1. Dispositif de climatisation de locaux (1), constitué de plaques de climatisation préfabriquées (7) et qui peut être configuré, en pose à sec, à la façon de couches, en forme de trame, sous un plafond (16), devant une paroi (2) ou sur un sol (31), dans lequel chaque plaque de climatisation (7) pouvant être en soi fixée au moins indirectement à une construction de base (3, 4 ; 8, 10) présente un corps (17) fait de matériaux minéraux sous forme d'un mélange d'hydrates de différents niveaux d'hydrates ainsi que d'additifs minéralogiques et/ou métalliques à structure dense, dans lequel est intégrée une configuration de canaux de fluide (22) en cuivre ou à base d'un alliage de cuivre ayant une résistance minimum de 250 N/mm² et un allongement avant striction supérieur à 0,9 %, qui au niveau de son extrémité peut être couplée de façon à conduire le fluide avec des plaques de climatisation (7) voisines des configurations de canaux de fluide (22), le mélange d'hydrates, en pourcentage massique, étant composé de jusqu'à 30 % de α-semi-hydrate (Ca SO₄ · 1/2 H₂O), de 30-60 % de β-semi-hydrate (CaSO₄ · 1/2 H₂O), de 15-45 % d'anhydrite III (CaSO₄III), de 0,05-5 % de dihydrate de sulfate de calcium (CaSO₄ · 2 H₂O) avec en additifs 2,5-30 % de dioxyde de silicium (SiO₂), 0,5-25 % de carbonate de calcium (CaCO₃) et 0,5-15 % de carbonate de magnésium (MgCO₃), et étant produit par ajout d'eau à raison d'environ 0,6-0,8 fois la quantité puis séchage ultérieur.

2. Dispositif selon la revendication 1, dans lequel le mélange d'hydrates, en pourcentage massique, se compose de jusqu'à 10 % de α-semi-hydrate (CaSO₄ · 1/2 H₂O), de 30-40 % de β-semi-hydrate, de 30-40 % d'anhydrite III (CaSO₄III), de 0,1-1 % de dihydrate de sulfate de calcium (CaSO₄ · 2 H₂O) avec en additifs 5-10 % de dioxyde de silicium (SiO₂), 1,5-10 % de carbonate de calcium (CaCO₃) et 0,5-2 % de carbonate de magnésium (MgCO₃), et est produit par ajout d'eau à raison d'environ 0,7 fois la quantité puis séchage ultérieur.

3. Dispositif selon la revendication 1 ou 2, dans lequel des fibres naturelles, en particulier des fibres naturelles traitées, et/ou des fibres artificielles, sont ajoutées au mélange d'hydrates.

4. Dispositif selon l'une des revendications 1 à 3, dans lequel des fibres de verre sont ajoutées au mélange d'hydrates à raison de 0,1-1 % en masse.

5. Dispositif selon l'une des revendications 1 à 3, dans lequel des fibres de cellulose sont ajoutées au mélange d'hydrates à raison de 0,5-3 % en masse.

6. Dispositif selon l'une des revendications 1 à 5, dans lequel des substances métalliques hautement conductrices sous forme en particulier de cuivre ou d'alliages de cuivre en granulés ou en poudre sont ajoutées au mélange d'hydrates à hauteur de jusqu'à 15 % en masse.

7. Dispositif selon l'une des revendications 1 à 5, dans lequel des substances métalliques hautement conductrices sous forme en particulier de cuivre ou d'alliages de cuivre en granulés ou en poudre sont ajoutées au mélange d'hydrates à hauteur de 5 à 10 % en masse.

8. Dispositif selon l'une des revendications 1 à 7, dans lequel des produits de régulation sous forme d'agents d'amélioration de l'écoulement sont ajoutés au mélange d'hydrates à hauteur de 0,1-2,5 % en masse.

9. Dispositif selon l'une des revendications 1 à 7, dans lequel des produits de régulation sous forme d'agents d'amélioration de l'écoulement sont ajoutés au mélange d'hydrates à hauteur de 0,1-1 % en masse.

10. Dispositif selon l'une des revendications 1 à 9, dans lequel des produits de régulation sous forme d'agents d'accélération de la décomposition sont ajoutés au mélange d'hydrates à hauteur de 0,1-2,5 % en masse.

11. Dispositif selon l'une des revendications 1 à 9, dans lequel des produits de régulation sous forme d'agents d'accélération de la décomposition sont ajoutés au mélange d'hydrates à hauteur de 0,1-1 % en masse.

12. Dispositif selon l'une des revendications 1 à 11, dans lequel le rapport entre l'épaisseur (AD) d'une configuration de canaux de fluide (22) et l'épaisseur (D) d'une plaque de climatisation (7) est au moins égal à 40%.

13. Dispositif selon l'une des revendications 1 à 12, dans lequel les plaques de climatisation (7) voisines des configurations de canaux de fluide (22) sont couplées par le biais de fiches de raccordement.

14. Dispositif selon l'une des revendications 1 à 13, dans lequel la configuration de canaux de fluide (22) présente avant ou pendant l'enrobage avec le mélange d'hydrates une température comprise entre 35 °C et 50 °C.
